# EUROPEAN PATENT SPECIFICATION

(11) **EP 2 962 364 B1**
(45) Date of publication and mention of the grant of the patent: **27.03.2019**
(21) Application number: 14709415.5
(22) Date of filing: 17.02.2014
(51) Int. Cl.: H01R 4/48, H02S 40/34, H01R 43/16

(54) **SPRING CLIP AND CONNECTION BOX**
FEDERKLEMME UND ANSCHLUSSDOSE
AGRAFE ÉLASTIQUE ET BOÎTE DE RACCORDEMENT

(30) Priority: 28.02.2013 CN 201320091307 U
(43) Date of publication of application: 06.01.2016
(73) Proprietor: Tyco Electronics (Shanghai) Co., Ltd., Pilot Free Trade Zone Shanghai (CN)
(72) Inventor: ZHONG, Yuan, Shanghai 200131 (CN); YIN, Hongjun, Shanghai 200131 (CN); TAO, Ting, Shanghai 200131 (CN); WANG, Feng, Shanghai 200131 (CN)
(74) Representative: Grünecker Patent- und Rechtsanwälte PartG mbB
(86) International application number: PCT/IB2014/059039
(87) International publication number: WO 2014/132165

(56) References cited:
- US-A1- 2006 223 385
- US-A1- 2006 289 053
- US-A1- 2010 170 716

## Description

### BACKGROUND OF THE INVENTION

### Field of the Invention

The present invention relates to a spring clip for connecting two conductive sheets, more particularly, relates to a spring clip for connecting a conductive sheet of a solar photovoltaic assembly and a connection box having the spring clip.

### Description of the Related Art

In an electronic system, for example, solar photovoltaic assembly, communication assembly, etc., for transmitting a micro electric signal, it is necessary to transmit the micro electric signal to an electrical device disposed inside a connection box through a conductive sheet (bus bar) so as to collect or retransmit the micro electric signal. Inside the connection box, a conductive terminal for electrically connecting the conductive sheet and a connection piece connected between the conductive terminal and the electrical device are disposed.

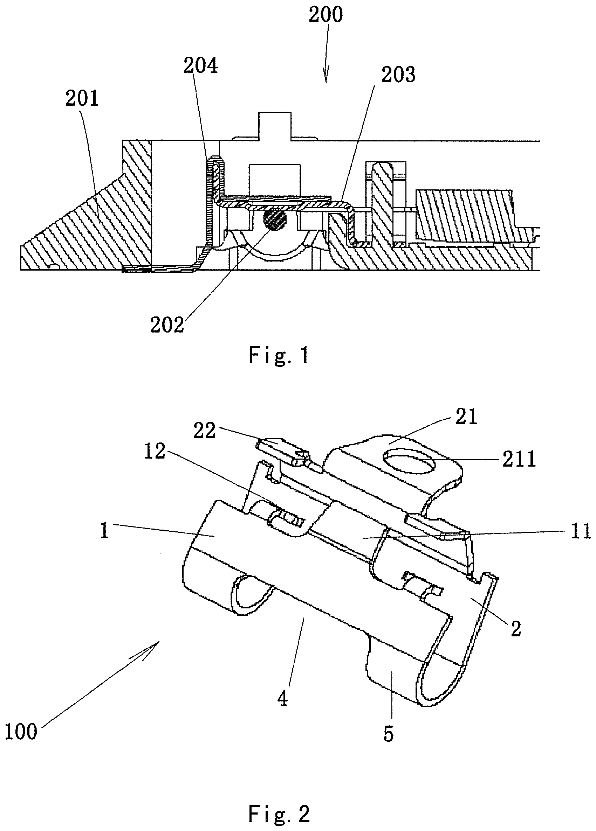

Fig. 1 is an illustrative local cross section view of a conventional connection box 200 in the prior art.

As shown in Fig. 1, the connection box 200 comprises a housing 201, a conductive terminal 203 and a conductive sheet (bus bar) 204. A through hole is formed in the housing 201 to introduce an external cable 202 therein. The conductive terminal 203 is electrically connected to the introduced cable 202 by, for example, soldering. The conductive sheet 204 is connected between the conductive terminal 203 and an electrical device (not shown), for example, a solar photovoltaic assembly. The conductive sheet 204 is made of a thin metal material, for example, a copper foil, and is soldered to the conductive terminal 203. Since the conductive sheet 204 is very thin, there is a possibility that rosin joint occurs between the conductive sheet 204 and the conductive terminal 203 during soldering them, which may cause a poor electrical contact and an unstable electrical connection between them.
Furthermore, it may produce an over high contact impendence and even an electric arc between them, this is a serious potential safety risk. Also, soldering the conductive sheet 204 to the conductive terminal 203 is very complicated and difficult, and it is difficult for them to be separated after the soldering, which is unfavorable for maintenance of the solar panel of the solar photovoltaic assembly.
In US 2006/0 289 053 A1 an electrical junction box for a solar cell module is disclosed, which allows for receiving a conductor strip between two clamping legs.
Document US 2010/0 170 716 A1 shows a terminal plate circuit using a pressing member for pressing a rectangular wire for contacting a terminal plate.
In US 2006/ 0 223 385 A1 an electrical connector assembly and system is shown that receives a blade in between a first and a second portion of a spring clip.

### SUMMARY OF THE INVENTION

The present invention has been made to overcome or alleviate at least one aspect of the above mentioned disadvantages.

Accordingly, it is an object of the present invention to provide a spring clip capable of achieving a stable mechanical fixation between a conductive terminal and a conductive sheet by a simple operation and improving transmission stability and quality of a micro electrical signal.

According to an aspect of the present invention, there is provided a spring clip for electrically connecting a conductive sheet to a plate-shaped conductive terminal, comprising a main body formed by bending a single spring metal sheet, wherein the main body comprises a first arm and a second arm. Afree end of the first arm extends towards the second arm to form a gripping portion together with a part of the second arm, and a free end of the second arm extends beyond the gripping portion to form an operation portion for expanding the gripping portion. An opening is formed in a connection portion of the first and second arms opposite to the gripping portion to allow an end of the conductive terminal to be inserted into the gripping portion through the opening and elastically gripped by the gripping portion. A pair of limiting portions extending inward are formed on the second arm, and the pair of limiting portions is configured to limit a displacement of the second arm.

In the above spring clip, each of the limiting portions has a substantial L-shape comprising a guide arm and a block arm, and the conductive terminal passes through between the guide arms of the paired limiting portions and is limited in a space defined by the pair of block arms.

In the above spring clip, the operation portion is formed by outwardly bending the free end of the second arm at a position adjacent to the gripping portion.

In the above spring clip, a hole is formed in the operation portion.

In the above spring clip, at least a pair of positioning portions extending inward is formed on the first arm, and the positioning portions are configured to hold the end of the conductive terminal inserted into the spring clip in place together with the gripping portion.

In the above spring clip, each of the positioning portions has a substantial L-shape, and the conductive terminal passes through between the paired positioning portions.

In the above spring clip, at least one spring contact extending inward is formed on the first arm, and the spring contact is configured to elastically contact the surface of the conductive terminal.

In the above spring clip, the connection portion of the first and second arms is shaped in an arc.

According to another aspect of the present invention, there is provided a connection box, comprising: a housing; a plurality of conductive terminals; and a plurality of spring clips, according to any one of claims -, mounted on the plurality of conductive terminals, respectively.

In the above connection box, the end of the conductive terminal inserted into the spring clip is substantially perpendicular to the rest of the conductive terminal.

In the above connection box, the connection box is mounted on a solar panel, and the conductive sheet is a bus bar led out of the solar panel.

In the above various embodiments of the present invention, the spring clip may be firstly mounted on the conductive terminal positioned inside the connection box, and the gripping portion of the spring clip may be expanded by driving the operation portion with a tool, for example, a screw driver, then the conductive sheet may be inserted into the expanded gripping portion and elastically gripped to the conductive terminal by the gripping portion so as to electrically connect the conductive sheet to the conductive terminal, improving the transmission stability and quality of the micro electrical signal. Furthermore, the operation portion can be repeatedly and simply driven for inserting/pulling the conductive sheet into/out of the gripping portion.

### BRIEF DESCRIPTION OF THE DRAWINGS

The above and other features of the present invention will become more apparent by describing in detail exemplary embodiments thereof with reference to the accompanying drawings, in which:
Fig. 1 is an illustrative local cross section view of a conventional connection box in the prior art;
Fig.2 is an illustrative perspective view of a spring clip according to a first exemplary embodiment of the present invention;
Fig.3 is a side view of the spring clip of Fig.2;
Fig.4 is an illustrative perspective view of a connection box according to the present invention in which the spring clip of Fig.2 is mounted;
Fig.5 is an illustrative local enlarged view of the connection box of Fig.4 when viewing in a direction;
Fig.6 is an illustrative local enlarged view of the connection box of Fig.4 when viewing in another direction;
Fig.7 is a local side view of the connection box of Fig.5;
Fig.8 is an illustrative perspective view of a spring clip according to a second exemplary embodiment of the present invention;
Fig.9 is a side view of the spring clip of Fig.8;
Fig. 10 is an illustrative local enlarged view of the connection box in which the spring clip of Fig.8 is mounted when viewing in a direction;
Fig.11 is an illustrative local enlarged view of the connection box in which the spring clip of Fig.8 is mounted when viewing in another direction; and
Fig. 12 is a local side view of the connection box of Fig. 10.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

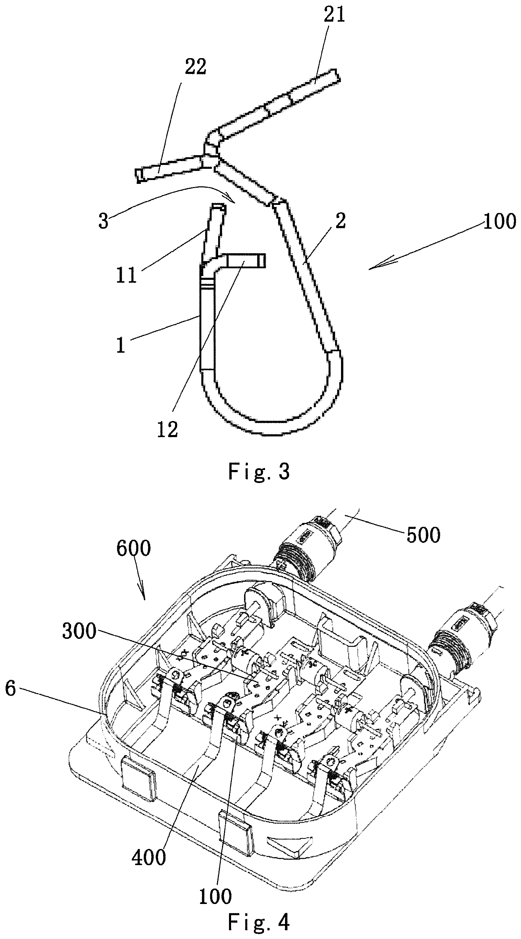

Fig.2 is an illustrative perspective view of a spring clip 100 according to a first exemplary embodiment of the present invention; Fig.3 is a side view of the spring clip 100 of Fig.2.

In an exemplary embodiment of the present invention, as shown in Figs.2-3, there is provided a spring clip 100 for electrically connecting a conductive sheet of an electronic system, for example, solar photovoltaic assembly, communication assembly, etc., for producing or transmitting a micro electric signal, to a conductive terminal of an electrical device inside a connection box. The electrical device processes or further transmits the micro electric signal transmitted from the conductive sheet.

In an exemplary embodiment, as shown in Figs.2-3, the spring clip 100 for electrically connecting a conductive sheet 400 to a plate-shaped conductive terminal 300 comprises a main body formed by bending a single spring metal sheet made of, for example, copper, copper alloy, etc.. The main body comprises a first arm 1 and a second arm 2. A free end 11 of the first arm 1 extends towards the second arm 2 to form a gripping portion 3 together with a part of the second arm 2, and a free end of the second arm 2 extends beyond the gripping portion 3 to form an operation portion 21 for expanding the gripping portion 3. An opening 4 is formed in a connection portion (bottom portion in Fig.3) 5 of the first and second arms 1, 2 opposite to the gripping portion 3, so that an end of the conductive terminal 300 is capable of being inserted into the gripping portion 3 through the opening 4 and elastically gripped by the gripping portion 3.

In an exemplary embodiment, each of the portions of the spring clip 100 may be formed by machining processing, such as, cutting, punching, bending, etc., a single metal sheet made of, for example, copper, copper alloy, etc..

In an exemplary embodiment, the connection portion 5 of the first and second arms 1, 2 opposite to the gripping portion 3 is formed in a substantial arc-shape, so that the gripping portion 3 of the spring clip 100 can produce an enough gripping force. The gripping portion 3 may be closed or have a gap in left-right direction and/or up-down direction. It should be appreciated for those skilled in this art that the gripping portion 3 may be configured in any suitable shape as long as it can reliably grip the conductive terminal 300 when the conductive terminal 300 is inserted into the gripping portion 3 through the opening 4.

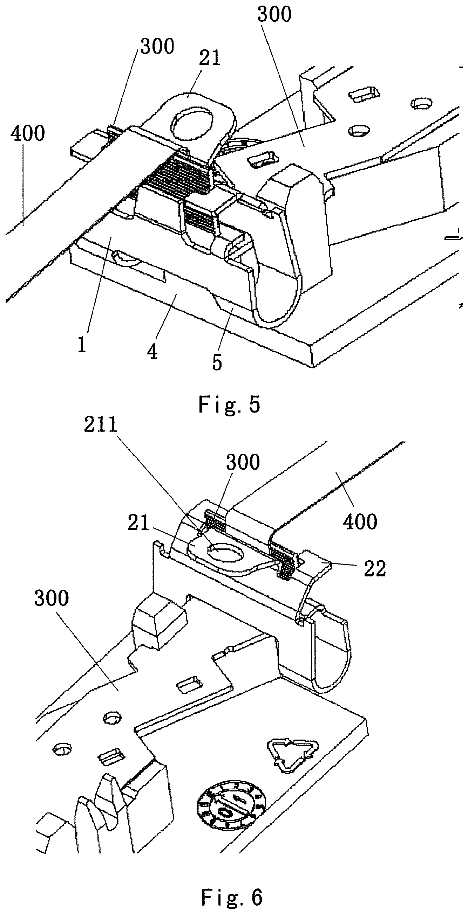

In an exemplary embodiment of the spring clip 100, the operation portion 21 is formed by outwardly bending the free end of the second arm 2 at a position adjacent to the gripping portion 3. Also, a hole 211 is formed in the operation portion 21. In this way, a tool, for example, a screw driver, may be inserted into the hole 211 to drive the operation portion 21 outward, so that the gripping portion 3 is expanded. In this condition, the entire spring clip 100 can be mounted on the conductive terminal 300 with a portion of the conductive terminal 300 inserted into the expanded gripping portion 3. When the tool is removed, the gripping portion 3 is released and elastically grips the conductive terminal 300. As shown in Fig.6, the opening 4 formed in the connection portion 5 may have an enough width to permit the conductive terminal 300 to enter inside the spring clip 100.

In an exemplary embodiment of the spring clip 100, as shown in Figs.2-3 and 6, at least a pair of positioning portions 12 extending inward (toward the second arm 2) are formed on the first arm 1. The positioning portions 12 are configured to hold the end of the conductive terminal 300 inserted into the spring clip in place, together with the gripping portion 3. In a further exemplary embodiment, each of the positioning portions 12 has a substantial L-shape, and the conductive terminal 300 passes through between the paired positioning portions 12. With this configuration, upon driving the operation portion 21 outward, the gripping portion 3 and the paired positioning portions 12 abut against the surface of conductive terminal 300 to prevent the spring clip 100 from being rotated. In an exemplary embodiment, the positioning portion 12 extends from a portion of the upper end of the first arm 1 toward the second arm 2.

In a further exemplary embodiment of the spring clip 100, a pair of limiting portions 22 extending inward are formed on the second arm 2, and the pair of limiting portions 22 are configured to limit a displacement of the second arm 2. Furthermore, each of the limiting portions 22 has a substantial L-shape and configured as a hook. The L-shaped limiting portion 22 comprises a guide arm and a block arm. The conductive terminal 300 passes through between the guide arms of the paired limiting portions 22 and is limited in a space defined by the pair of block arms. The block arm of the L-shaped limiting portion 22 may extend over the surface of the conductive terminal 300 and be separated from the surface of the conductive terminal 300 by a predetermined distance. With this configuration, when the operation portion 21 is driven to move outward by the predetermined distance with the screw driver, the block arm of the limiting portion 22 abuts against the surface of the conductive terminal 300 to prevent the second arm 2 from being further moved outward. As a result, the limiting portion 22 can prevent the gripping portion 3 from being incapable of returning to its original state due to being excessively expanded by an overlarge distance.

In a further exemplary embodiment, as shown in Figs.4-7, there is provided a connection box 600 comprising a housing 6 made of, for example, plastic material, a plurality of conductive terminals 300 each mounted in the housing 6 and electrically connected to respective external cables 500, a plurality of spring clips 100 as stated in the above embodiments and a plurality of conductive sheets 400. The end of the conductive terminal 300 is inserted into the gripping portion 3 through the opening 4 of the spring clips 100 and elastically gripped by the gripping portion 3. The end of the conductive sheets 400 is inserted into the gripping portion 3 from a portion apposite to the opening 4 and is elastically gripped to the conductive terminal 300 by the gripping portion 3. In order to reduce the height of the connection box 6, the end of the conductive terminal 300 inserted into the spring clip 100 is configured to be substantially perpendicular to the rest of the conductive terminal 300. Similarly, the end of the conductive sheet 400 inserted into the spring clip 100 is configured to be substantially perpendicular to the rest of the conductive sheet 400. The connection box 6 is mounted on a solar panel, and the conductive sheet 400 is used as a bus bar led out of the solar panel.

Hereafter, it will describe in detail the operation of the spring clip of the present invention with reference to Figs.4-7.

In order to mount the spring clip 100 on the conductive terminal 300, first, the conductive terminal 300 is inserted into the gripping portion 3 through the opening 4, while driving the operation portion 21 to move outward and expand by a tool, for example, a screw driver, inserted into the hole 211 of the operation portion 21; then, the conductive terminal 300 is further inserted into the expanded gripping portion 3; and then, the screw driver is removed to return the gripping portion 3 to its original state, so that the spring clip 100 is completely mounted on the conductive terminal 300 and elastically held on the conductive terminal 300.

If it is required to connect the conductive sheet 400 to the conductive terminal 300, the following steps may be performed: expanding the gripping portion 3 with the screw driver again, inserting a portion of the conductive sheet 400 into the spring clip 100, and pulling the screw driver out of the spring clip 100 to restore the gripping portion 3 to its original state. In this way, the conductive terminal 300 and the conductive sheet 400 are mechanically and elastically held together by the spring clip 100.

Accordingly, the mounting of the spring clip 100 to the conductive terminal 300, the removing of the spring clip 100 from the conductive terminal 300, the connecting of the conductive sheet 400 to the conductive terminal 300 and the disconnecting of the conductive sheet 400 from the conductive terminal 300 can be easily accomplished repeatedly and performed by simply driving the operation portion 21 to expand the gripping portion 3. Furthermore, the connecting/disconnecting of the conductive sheet 400 to/from the conductive terminal 300 can be repeatedly performed without removing the spring clip 100 from the conductive terminal 300.

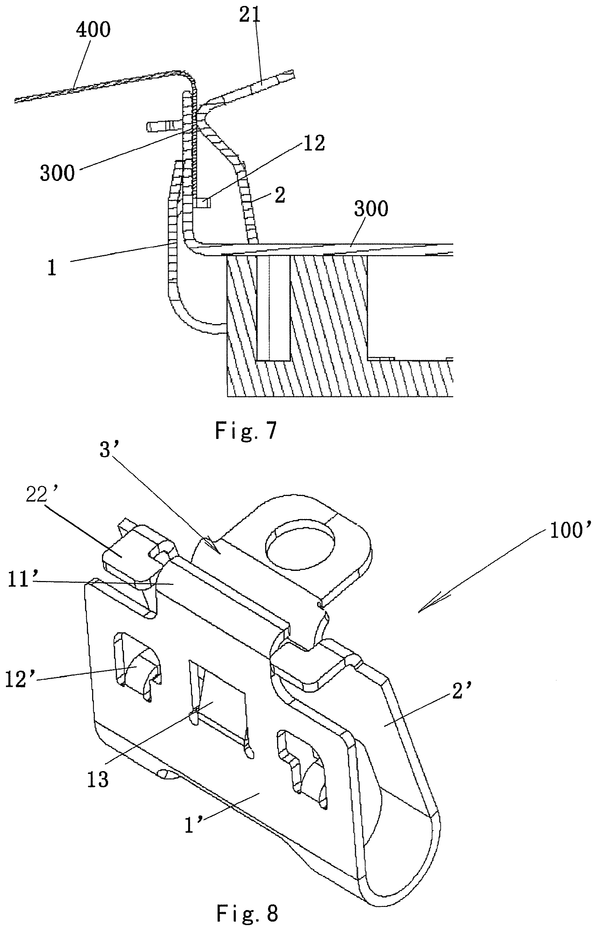

Figs.8-9 show a spring clip 100' according to a second exemplary embodiment of the present invention.

The spring clip 100' of the second exemplary embodiment is substantially the same as the spring clip 100 of the first exemplary embodiment in configuration, and the like reference numerals refer to the like elements. For the purpose of concise, it will only describe the difference of the spring clip 100' of the second exemplary embodiment from the spring clip 100 of the first exemplary embodiment herein.

In the spring clip 100' of the second exemplary embodiment, a free end 11' of a first arm 1' extends toward a second arm 2' to form a gripping portion 3' together with a portion of the second arm 2'. The spring clip 100' further comprises a limiting portion 22' for limiting a displacement of the second arm 2' and an operation portion 21' for driving the first arm 1' to move outward.

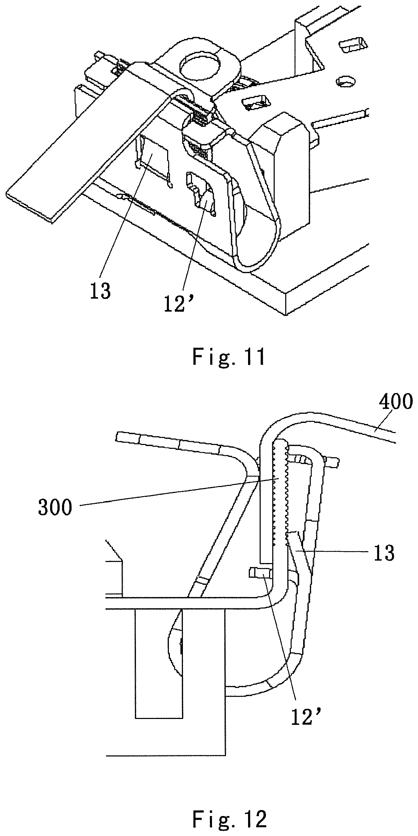

In the spring clip 100' of the second exemplary embodiment, as shown in Figs. 8 and 12, a pair of spring contacts 13 extending inward is formed on the first arm 1'. The spring contacts 13 are configured to elastically contact the surface of the conductive terminal 300. In this way, the spring clip 100' can be elastically held on the conductive terminal 300 to prevent the spring clip 100' from being separated from the conductive terminal 300. Also, the spring contacts 13 can ensure the stability of the conductive terminal 300. In an exemplary embodiment, a pair of positioning portions 12' of the spring clip 100' is formed by bending inward from the surface of the first arm 1' and has a substantial L-shape. The positioning portions 12' together with the gripping portion 3' hold the conductive terminal 300 in place.

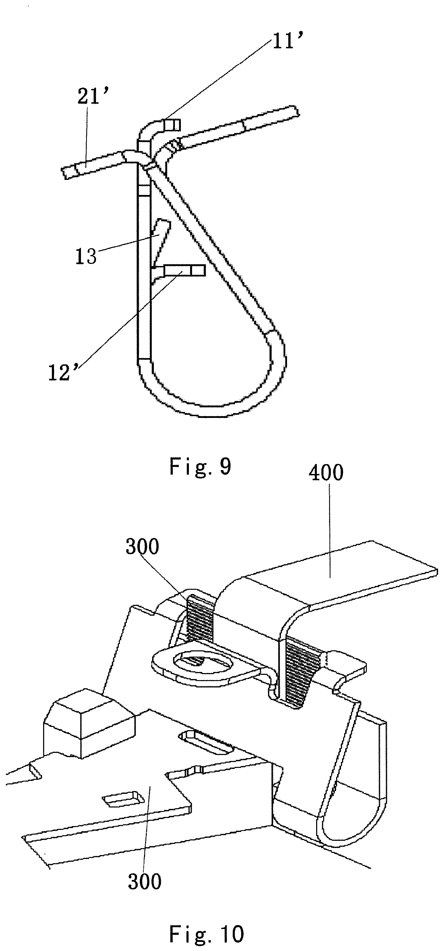

Figs. 10-12 show a connection box in which the spring clip 100' of the second exemplary embodiment is mounted for holding the conductive terminal 300 and the conductive sheet 400 together.

In the above various embodiments of the present invention, the spring clip may be firstly mounted on the conductive terminal inside the connection box, and the gripping portion of the spring clip may be expanded by driving the operation portion with a tool, for example, a screw driver, then the conductive sheet may be inserted into the expanded gripping portion and elastically gripped to the conductive terminal by the gripping portion so as to electrically connect the conductive sheet to the conductive terminal, improving the transmission stability and quality of the micro electrical signal. Furthermore, the operation portion can be repeatedly and simply driven for inserting/pulling the conductive sheet into/out of the gripping portion.

With the spring clip of the present invention, the solar panel of the solar photovoltaic assembly can be electrically and stably connected to the connection box. Furthermore, the assembly of them is very simple and quickly without an additional apparatus, for example, a tin soldering device. Also, they can be repeatedly and easily assembled and disassembled, facilitating the long term maintenance of the solar panel.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle, so that more kinds of spring clip can be achieved with overcoming the technical problem of the present invention.

Although several exemplary embodiments have been shown and described, it would be appreciated by those skilled in the art that various changes or modifications may be made in these embodiments without departing from the principles of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A spring clip (100) for electrically connecting a conductive sheet (400) to a plate-shaped conductive terminal (300), comprising:
a main body formed by bending a single spring metal sheet, and comprising a first arm (1) and a second arm (2),
wherein a free end (11) of the first arm (1) extends towards the second arm (2) to form a gripping portion (3) together with a part of the second arm (2), and a free end of the second arm (2) extends beyond the gripping portion (3) to form an operation portion (21) for expanding the gripping portion (3),
wherein an opening (4) is formed in a connection portion (5) of the first and second arms (1, 2) opposite to the gripping portion (3) to allow an end of the conductive terminal (300) to be inserted into the gripping portion (3) through the opening (4) and elastically gripped by the gripping portion (3),
**characterized in that** a pair of limiting portions (22) extending inward is formed on the second arm (2), wherein each of the limiting portions (22) has a substantial L-shape comprising a guide arm and a block arm,
whereby the pair of limiting portions (22) is configured to limit a displacement of the second arm (2), as the conductive terminal (300), when inserted, passes through between the guide arms of the paired limiting portions (22) and is limited in a space defined by the pair of block arms.

2. The spring clip according to claim 1,
wherein the operation portion (21) is formed by outwardly bending the free end of the second arm (2) at a position adjacent to the gripping portion (3).

3. The spring clip according to claim 2,
wherein a hole (211) is formed in the operation portion (21).

4. The spring clip according to claim 1,
wherein at least a pair of positioning portions (12) extending inward are formed on the first arm (1), and
wherein the positioning portions (12) are configured to hold the end of the conductive terminal (300) inserted into the spring clip in place, together with the gripping portion (3).

5. The spring clip according to claim 4,
wherein each of the positioning portions (12) has a substantial L-shape, and
wherein the conductive terminal (300) passes through between the paired positioning portions (12).

6. The spring clip according to claim 1,
wherein at least one spring contact (13) extending inward is formed on the first arm (1), and
wherein the spring contact (13) is configured to elastically contact the surface of the conductive terminal (300).

7. The spring clip according to claim 1,
wherein the connection portion (5) of the first and second arms (1, 2) is in an arc shape.

8. A connection box (600), comprising:
a housing (6);
a plurality of conductive terminals (300); and
a plurality of spring clips (100), according to any one of claims 1-7, mounted on the plurality of conductive terminals (300), respectively.

9. The connection box according to claim 8,
wherein the end of the conductive terminal (300) inserted into the spring clip (100) is substantially perpendicular to the rest of the conductive terminal (300).

10. The connection box according to claim 8,
wherein the connection box is mounted on a solar panel, and
wherein the conductive sheet (400) is a bus bar led out of the solar panel.

## Patentansprüche

1. Federklemme (100) zum elektrischen Verbinden einer leitenden Bahn (400) mit einem plattenförmigen leitenden Anschluss (300), wobei sie umfasst:
einen Hauptkörper, der ausgebildet wird, indem ein einzelnes Federblech gebogen wird, und der einen ersten Schenkel (1) sowie einen zweiten Schenkel (2) umfasst,
wobei ein freies Ende (11) des ersten Schenkels (1) sich so auf den zweiten Schenkel (2) zu erstreckt, dass zusammen mit einem Teil des zweiten Schenkels (2) ein Klemm-Abschnitt (3) gebildet wird, und sich ein freies Ende des zweiten Schenkels (2) so über den Klemm-Abschnitt (3) hinaus erstreckt, dass ein Betätigungs-Abschnitt (21) zum Aufweiten des Klemm-Abschnitts (3) gebildet wird,
eine Öffnung (4) in einem Verbindungs-Abschnitt (5) des ersten und des zweiten Schenkels (1, 2) dem Klemm-Abschnitt (3) gegenüberliegend ausgebildet ist, so dass ein Ende des leitenden Anschlusses (300) über die Öffnung (4) in den Klemm-Abschnitt (3) eingeführt werden kann und elastisch von dem Klemm-Abschnitt (3) festgeklemmt wird,
**dadurch gekennzeichnet, dass**
paarige Beschränkungs-Abschnitte (22), die sich nach innen erstrecken, an dem zweiten Schenkel (2) ausgebildet sind, wobei jeder der Beschränkungs-Abschnitte im Wesentlichen L-förmig ist und einen Führungs-Schenkel sowie einen Sperr-Schenkel umfasst,
und die paarigen Beschränkungs-Abschnitte (22) so eingerichtet sind, dass sie eine Verschiebung des zweiten Schenkels (2) beschränken, wenn der leitende Anschluss (300) beim Einführen zwischen den Führungs-Schenkeln der paarigen Beschränkungs-Abschnitte (22) hindurchtritt und auf einen Raum beschränkt wird, der durch die paarigen Sperr-Schenkel gebildet wird.

2. Federklemme nach Anspruch 1,
wobei der Betätigungs-Abschnitt (21) ausgebildet wird, indem das freie Ende des zweiten Schenkels (2) an einer an den Klemm-Abschnitt (3) angrenzenden Position nach außen gebogen wird.

3. Federklemme nach Anspruch 2,
wobei ein Loch (211) in dem Betätigungs-Abschnitt (21) ausgebildet ist.

4. Federklemme nach Anspruch 1,
wobei wenigstens ein Paar Positionier-Abschnitte (12), die sich nach innen erstrecken, an dem ersten Schenkel (1) ausgebildet ist, und
die Positionier-Abschnitte (12) so eingerichtet sind, dass sie das Ende des in die Federklemme eingeführten leitenden Anschlusses (300) zusammen mit dem Klemm-Abschnitt (3) fixieren.

5. Federklemme nach Anspruch 4,
wobei jeder der Positionier-Abschnitte (12) im Wesentlichen L-förmig ist, und
der leitende Anschluss (300) zwischen den paarigen Positionier-Abschnitten (12) hindurchtritt.

6. Federklemme nach Anspruch 1,
wobei wenigstens ein Feder-Kontakt (13), der sich nach innen erstreckt, an dem ersten Schenkel (1) ausgebildet ist, und
der Feder-Kontakt (13) so eingerichtet ist, dass er elastisch mit der Oberfläche des leitenden Anschlusses (300) in Kontakt kommt.

7. Federklemme nach Anspruch 1,
wobei der Verbindungs-Abschnitt (5) des ersten und des zweiten Schenkels (1, 2) eine Bogenform hat.

8. Anschlussdose (600), die umfasst:
ein Gehäuse (6);
eine Vielzahl leitender Anschlüsse (300); und
eine Vielzahl von Federklemmen (100) nach einem der Ansprüche 1-7, die jeweils an der Vielzahl leitender Anschlüsse (300) angebracht sind.

9. Anschlussdose nach Anspruch 8,
wobei das Ende des in die Federklemme (100) eingeführten leitenden Anschlusses (300) im Wesentlichen rechtwinklig zu dem Rest des leitenden Anschlusses (300) ist.

10. Anschlussdose nach Anspruch 8,
wobei die Anschlussdose an einem Solarpanel angebracht ist, und
die leitende Bahn (400) eine aus dem Solarpanel herausgeführte Sammelschiene ist.

## Revendications

1. Pince à ressort (100) pour connecter électriquement une feuille conductrice (400) à une borne conductrice en forme de plaque (300), comprenant :
un corps principal formé en pliant une feuille métallique formant ressort unique, et comprenant un premier bras (1) et un second bras (2),
dans laquelle une extrémité libre (11) du premier bras (1) s'étend vers le second bras (2) pour former une partie de préhension (3) conjointement avec une partie du second bras (2), et une extrémité libre du second bras s'étend au-delà de la partie de préhension (3) pour former une partie de fonctionnement (21) afin d'élargir la partie de préhension (3),
dans laquelle une ouverture (4) est formée dans une partie de connexion (5) des premier et second bras (1, 2) opposée à la partie de préhension (3) pour permettre à une extrémité de la borne conductrice (300) d'être insérée dans la partie de préhension (3) à travers l'ouverture (4) et saisie de manière élastique par la partie de préhension (3),
**caractérisée en ce que**
une paire de parties de limitation (22) s'étendant vers l'intérieur est formée sur le second bras (2), chacune des parties de limitation (22) ayant une forme sensiblement en L comprenant un bras de guidage et un bras de blocage,
de sorte que la paire de parties de limitation (22) étant configurée pour limiter un déplacement du second bras (2), lorsque la borne conductrice (300), une fois insérée, passe entre les bras de guidage des parties de limitation (22) appariées et est limitée dans un espace défini par la paire de bras de blocage.

2. Pince à ressort selon la revendication 1,
dans laquelle la partie de fonctionnement (21) est formée en pliant vers l'extérieur l'extrémité libre du second bras (2) en une position adjacente à la partie de préhension (3).

3. Pince à ressort selon la revendication 2,
dans laquelle un trou (211) est formé dans la partie de fonctionnement (21).

4. Pince à ressort selon la revendication 1,
dans laquelle au moins une paire de parties de positionnement (12) s'étendant vers l'intérieur est formée sur le premier bras (1), et
dans laquelle les parties de positionnement (12) sont configurées pour maintenir en place l'extrémité de la borne conductrice (300) insérée dans la pince à ressort, conjointement avec la partie de préhension (3).

5. Pince à ressort selon la revendication 4,
dans laquelle chacune des parties de positionnement (12) a une forme sensiblement en L, et
dans laquelle la borne conductrice (300) passe entre les parties de positionnement (12) appariées.

6. Pince à ressort selon la revendication 1,
dans laquelle au moins un contact à ressort (13) s'étendant vers l'intérieur est formé sur le premier bras (1), et
dans laquelle le contact à ressort (13) est configuré pour entrer en contact de manière élastique avec la surface de la borne conductrice (300).

7. Pince à ressort selon la revendication 1,
dans laquelle la partie de connexion (5) des premier et second bras (1, 2) a la forme d'un arc.

8. Boîtier de connexion (600) comprenant :
un logement (6) ;
une pluralité de bornes conductrices (300) ; et
une pluralité de pinces à ressort (100), selon l'une quelconque des revendications 1 à 7, montées sur la pluralité de bornes conductrices (300), respectivement.

9. Boîtier de connexion selon la revendication 8,
dans lequel l'extrémité de la borne conductrice (300) insérée dans la pince à ressort (100) est sensiblement perpendiculaire au reste de la borne conductrice (300).

10. Boîtier de connexion selon la revendication 8,
dans lequel le boîtier de connexion est monté sur un panneau solaire, et
dans lequel la feuille conductrice (400) est une barre omnibus qui sort du panneau solaire.
